# EUROPEAN PATENT SPECIFICATION

(11) **EP 2 750 350 B1**
(45) Date of publication and mention of the grant of the patent: **29.03.2017**
(21) Application number: 13195208.7
(22) Date of filing: 29.11.2013
(51) Int. Cl.: H04L 29/06, H04L 29/08, G06F 9/445, H04W 12/12

(54) **System and method for deploying preconfigured software**
System und Verfahren zur Anwendung vorkonfigurierter Software
Système et procédé de déploiement de logiciel préconfiguré

(30) Priority: 25.12.2012 RU 2012156449; 27.03.2013 US 201313851791
(43) Date of publication of application: 02.07.2014
(73) Proprietor: AO Kaspersky Lab, Moscow 125212 (RU)
(72) Inventor: Voronkov, Konstantin P., 125212 Moscow (RU); Deshevykh, Stepan N., 125212 Moscow (RU); Yablokov, Victor V., 125212 Moscow (RU)
(74) Representative: Prock, Thomas

(56) References cited:
- US-A1- 2007 157 288
- US-A1- 2012 284 704
- US-A1- 2012 311 659
- US-B1- 7 996 879
- US-B1- 8 131 281

## Description

### Field of the Invention

The invention relates generally to information processing and communications technologies and, more particularly, to automated selective deployment of a software application to be installed via a software installation package.

### Background of the Invention

When managing computer network security, network administrators often face the difficulty of setting up the security software being installed on various devices. Solving this problem becomes especially important when deploying software (for example, an antivirus or access control systems) at large companies or in local area networks where the configurations of the devices connected to the network are significantly different from one another.

Another factor complicating the installation process of new software is the diversity of the user groups who have different access rights to the resources of an enterprise private network (EPN). The distributed infrastructure of EPNs often involves the use of various security policies, depending on the device, the network segment, and the user. It is impossible to consider all the above factors when installing software on network devices using the existing technical solutions.

The ongoing development of computer equipment increases the complexity of not only infrastructure, but also of security applications. A typical user is unable to optimally configure a security application due to lack of expertise and to company policies that aim to increase the level of security.

In general, remote administration tools are used to manage remote work stations (e.g., user devices). This allows administrators to set up security tools after their installation on desktop or notebook computer systems or on corporate devices with an installed administration agent. However, administration agents cannot be installed on all computer systems. In today's world, there is a trend of increasing presence of personal devices that have no installed administration tools. Such devices include, for example, smartphones, tablet computers, netbooks and other portable devices, which the users utilize for work and oftentimes also for personal purposes. For secure operation on an enterprise private network, the installation of security tools and the subsequent setup of such tools must be performed on the user's side.

US2007/0157288 A1 discloses the deployment of policies to targets US2012/0284704 A1 discloses the customisation of an installation package by a customisation engine. in accordance with a set of rules and supplied data.

More generally, there is a need for an effective and efficient solution for automatically deploying preconfigured software for installation on user devices that operate on a computer network subject to various security policies.

### Summary of the Invention

The invention is defined in independent claims 1 and 11. One aspect of the invention is directed to a system for automated deployment of a software application to be installed, via a software installation package provided over a computer network, onto a plurality of different user devices for a plurality of different users. In the system, a set of instructions is executable by computing hardware and stored in a non-transitory storage medium that, when executed, cause the computing hardware to implement a task manager module and a configurator module.

The task manager module obtains an initial software installation package, and communicates with a network attributes data store via the computer network to obtain information representing (a) associations between the plurality of users and the plurality of user devices, (b) user attributes from which access privilege level information for individual users is determinable, and (c) device attributes for each of the plurality of user devices, including network connectivity information.

The configurator module custom-configures the initial software installation package for individual ones of the plurality of user devices based on the information representing (a) and (b) to produce a plurality of different specially-configured software installation packages, each one of which corresponds to one or more specific users and one or more specific user devices. Also, each specially-configured software installation package includes installation parameters that establish functionality for the software application based on the access privilege level of the corresponding one or more specific users.

The configurator module further custom-configures data transfer channels for individual ones of the plurality of user devices based on the information representing (a) and (c), each data transfer channel corresponding to one or more specific users and one or more specific user devices. Each data transfer channel is associated with a selected data transfer protocol determined by the configurator module to be suitable for the one or more specific user devices.

The software application can be a security application user agent in one type of embodiment. In other embodiments, the software application is any deployable-software, such as productivity applications (e.g., word processing, spreadsheet, and the like), business system software, CAD/CAM software, database applications, etc.

In a related embodiment, the configurator module is adapted to produce each specially-configured software installation package such that the installation parameters establish functionality based further on the device attributes corresponding to the one or more user devices. In another related embodiment, the task manager module is adapted to obtain information representing a security policy, and wherein the configurator module is adapted to produce each specially-configured software installation package such that the installation parameters establish functionality based further on that security policy.

In one type of embodiment, the configurator module is communicatively coupled to a data delivery service module that supplies a link to a data store from which each specially-configured software installation package is downloadable by each user device. In a related embodiment, the configurator module is communicatively coupled to a mobile device administration module that supplies a link to a data store from which each specially-configured software installation package for user devices that are mobile devices is downloadable by each user device via a messaging service specific to mobile devices.

Another aspect of the invention is directed to a method for automated deployment of a software application to be installed, via a software installation package provided over a computer network, onto a plurality of different user devices for a plurality of different users. The method includes:
- obtaining an initial software installation package, and information representing (a) associations between the plurality of users and the plurality of user devices, (b) user attributes from which access privilege level information for individual users is determinable, and (c) device attributes for each of the plurality of user devices, including network connectivity information;
- custom-configuring the initial software installation package for individual ones of the plurality of user devices based on the information representing (a) and (b) to produce a plurality of different specially-configured software installation packages, each one of which corresponds to one or more specific users and one or more specific user devices, wherein each specially-configured software installation package includes installation parameters that establish functionality for the software application based on the access privilege level of the corresponding one or more specific users; and
- custom-configuring data transfer channels for individual ones of the plurality of user devices based on the information representing (a) and (c), each data transfer channel corresponding to one or more specific users and one or more specific user devices, wherein each data transfer channel is associated with a selected data transfer protocol determined to be suitable for the one or more specific user devices.

### Brief Description of the Drawings

The invention may be more completely understood in consideration of the following detailed description of various embodiments of the invention in connection with the accompanying drawings, in which:
FIG. 1 is a block diagram illustrating a high-level system architecture for an automated software deployment system according to one embodiment.
FIG. 2 is a diagram illustrating additional details of the system of FIG. 1 according to one embodiment.
FIG. 3 is a flow diagram illustrating an exemplary process of operation of the system of FIGs. 1 and 2 according to one embodiment.
Fig. 4A is a diagram illustrating an example of loading of an installation package using a hyperlink sent by a data supply service according to one embodiment.
Fig. 4B is a diagram illustrating an example of loading of an installation package using a hyperlink sent through mobile communication networks according to a one embodiment.
Fig. 4C is a diagram illustrating an example of the loading of an installation package using a hyperlink sent in the QR code format according to a one embodiment.
FIG. 5 is a block diagram illustrating an example of a general-purpose computer system on which aspects of the invention may be carried out.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention as defined by the appended claims.

### Detailed Description of the Preferred Embodiments

Aspects of the present invention are directed to deployment of specially-configured software on an enterprise private network (EPN). In the present context an EPN is a computer network operated by an organization such as a company, educational institution, a governmental agency, a non-governmental organization, a non-profit organization, or the like, and is not limited to any particular network architecture, whether host-based, or content-based, etc. An EPN can connect to a public network such at the Internet, or to other private networks.

A system for deployment of pre-configured software, in one of the embodiments, includes a task manager module, an analyzer module and a configurator module, installed on an administration server.

The term module as used herein means a real-world device, component, or arrangement of components implemented using hardware, such as by an application specific integrated circuit (ASIC) or field-programmable gate array (FPGA), for example, or as a combination of hardware and software, such as by a microprocessor system and a set of program instructions that adapt the module to implement the particular functionality, which (while being executed) transform the microprocessor system into a special-purpose device. A module can also be implemented as a combination of the two, with certain functions facilitated by hardware alone, and other functions facilitated by a combination of hardware and software. In certain implementations, at least a portion, and in some cases, all, of a module can be executed on the processor(s) of one or more computers (e.g., cluster nodes) that execute an operating system, system programs, and application programs, while also implementing the module using multitasking, multithreading, distributed (e.g., cloud) processing where appropriate, or other such techniques. Accordingly, each module can be realized in a variety of suitable configurations, and should generally not be limited to any particular implementation exemplified herein, unless such limitations are expressly called out.

In operation, a system according to an example embodiment carries out a process for deployment of pre-configured software in stages, where: a) on the administration server, a task is created for installation of software to a user device; b) from the computer network attributes data store, attributes of such objects are loaded which match the user's account and correspond to the user-controlled device on which it is planned to install the software; b) the software installation package and data transfer channel are configured, determining the configuration parameters by the loaded attributes in accordance with the security policy set for that user and for that device; d) the installation tasks are launched for execution; in this case, the configured installation package is loaded to the user device through the data transfer channel, and the software is installed in accordance with the configuration parameters.

Related embodiments facilitate the installation of software to a user's mobile device. In those embodiments where the software represents a security agent, the installation package configuration parameters include the following parameters: setup parameters for the protection components of the security agent; parameters of the installation of the security agent on the user device; parameters of the network connection with the administration server; parameters for inclusion of the protection component into the security agent; parameters for adding a security certificate.

The installation package configuration parameters in a particular embodiment are determined by the user's and the device's attributes, which include: the user's role in the company; the user device's configuration; the parameters of the network connection with the administration server; a list of accessible network resources; the user's workplace. In a related embodiment, the attributes are loaded from a directory service.

The installation package can contain a configuration file, an installation file, and a security certificate, for example of security agents (antivirus, firewall, antispam, web antivirus and other security systems). The automation of the installation reduces the number of operations performed by the administrator when creating an agents deployment task and reduces the number of created tasks. The use of this technology allows to make the process of installation and first setup of a security tool transparent for the user. This invention can be also used for other types of software, such as office applications, database clients and other programs.

Another distinctive feature of this invention, as compared to the existing technology level, is automatic setup of a channel for the transfer of the installation package to a user device. Automatic setup includes the selection of a transfer channel depending on the device type and user account type, and the establishment of data transfer parameters. For example, the creation of a link to the installation package in a format corresponding to the data transfer channel.

Ensuring reliable EPN security is facilitated by a distributed system of security applications, each of which has a specific functionality and is installed on end devices of a network. When implementing security applications, such as an antivirus module, the diversity of the end computer devices to be protected, i.e. multiple software and hardware configurations, is taken into account.

The types of user devices on the network to be protected are not limited to desktop computers and servers installed by a company's system administrator; also included are personal user devices, on which unsafe software may be installed and which may represent a data leakage channel. Personal devices should preferably be protected and monitored when performing service operations, for example, when working with corporate resources (data, applications, network connections). The difficulty lies in the fact that such devices do not have remote administration and control tools. Therefore, the setup of security tools is performed by the user; this creates a number of difficulties for the technical support services and for the security service. A description of an option to solve this problem will be provided in this document.

The specification of an EPN, including network connection parameters, a list of network services, and the configuration of network devices, can be presented in a network attributes data store, such as, for example, a directory service. This type of data store can be implemented as a tree structure stored centrally or in distributed fashion on the EPN, and containing objects representing the various user devices and their attributes, which characterize the parameters of such devices. One example of a directory service is defined by the LDAP protocol and can be used by outside programs and services, including administration tools, for adaptive setup of security tools, taking into account the EPN specifications.

From the state of the art, other methods for presenting data on network resources and their connections are known; such methods are implemented, for example, in databases, XML files and other sources. Aspects of the invention are not limited to the integration of an administration server with a directory service. Thus, in the present context, the term *network attributes data store* refers to any suitable arrangement for storage and presentation of information about network users and devices.

An antivirus application is a ubiquitous element of EPN protection. Today's antivirus solutions include functionality going beyond mere verification of files for the presence of a malicious code. As used in the present context, an antivirus tool or module should be understood as referring to a multi-functional computer security application. Depending on the type of the antivirus application, the functional capabilities include computer system protection, information protection, control, and synchronization with other security tools. The architecture of an antivirus tool for an EPN can be complex and can include multiple modules installed on various EPN nodes. The modules installed on end devices of a network, including personal devices of EPN users, can vary and will be referred to herein as security agents.

A user of a device operating on the EPN is generally a company employee or authorized visitor registered on the network. In accordance with typical practice, at the time of hiring, an account is created for each employee; the account is used to store personal information, such as user name, birth date, position, and passwords, keys, or other access credentials necessary for the user to gain access to corporate resources. For company visitors, a separate profile is generally created, which limits their rights for access to network resources. In order to work on the computer network and to gain access to the network resources and applications, the user must pass an authentication. A directory service is perhaps the most common service for ensuring control over access and accounting of users and network resources. There are standards for structuring network objects on which the most popular directory service designs are based. Therefore, most computer networks in companies include a standard service containing necessary information about the users.

Depending on the network structure, directory service users can be divided into groups. A group is used to combine users by a certain characteristic and for inheritance of the group's specifics by all users belonging to the group. For example, a group can combine employees by offices, by the company's structural units, by the granted level of access to information, or by other characteristics. Each group, as well as each account, contains attributes which characterize connection parameters, rights of access to specific resources and applications of the network. Such structure of storage and safe presentation of data on the network objects, implemented in a directory service, allows to implement the security policy adopted at the company.

One of the criteria during the categorization of users is their position at the company and their access to valuable information presenting commercial or government secrets. Accordingly, the information security requirements for the company management are more strict than for the ordinary employees. The categorization of users can be performed dynamically, by adding a user to a group depending on the behavior, connections, personal characteristics and dynamics of the changes in the security rating of the user. A more detailed description of user categorization tools by the above-mentioned factors is provided in U.S. Pat. No. 8,181,253.

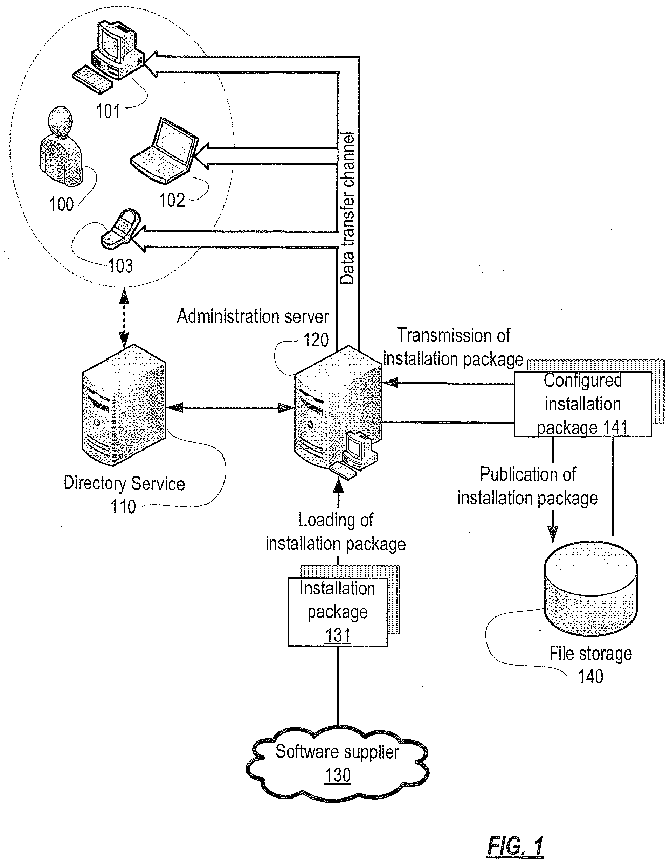

FIG. 1 is a block diagram illustrating a high-level system architecture for an automated software deployment system according to one embodiment. On a network composed of devices (servers, desktop computers 101, notebooks 102 and portable devices 103) and offering a number of services (mail service, web service, antivirus protection service and others) for the users 100, a directory service server 110 is often used to organize the management of such resources. This server contains a database for organized storage of the information about the network and allows to automate most management tasks, which include, for example, setting up applications and network connections and sharing access rights. The interaction with the directory service 110 is performed using a standard protocol. As one of the embodiments, a system will be discussed which interacts with an LDAP (Lightweight Directory Access Pratocol)-compatible directory service 110.

When a system administrator or a security service specialist creates a task of deploying security agents or another application on network devices, one item to be loaded is the installation package 131 from a software supplier 130; the package is saved in the file storage 140. In the case of a security agent, the software is supplied by a company which develops the security tool, or by a software distributor. The installation packages and the installation files (if they are not included in the installation packages) used to install programs on user devices, including installers of security agents, are stored in the file storage 140. The files which are to be loaded to EPN devices are published. The publication generally involves providing an interface for the loading of the package and for the setup of the relevant access rights for the devices and the users. The file storage can include a file server, a directory on the administration server, a database, or any other data storage tool providing access to the files.

The network administrator performs all the actions on the administration console, which is a management terminal of the administration server 120. Once the installation package is loaded, the group of devices is determined on which the program is to be installed. The group of devices is specified during the creation of the task or is defined automatically. For example, a group of devices can be automatically defined by all devices connected to the network for the first time, or by all devices on which no security agent is installed, and can add them when creating the deployment task.

For each device or for each user of a device included in the device list or in the group task user list, the relevant classes and attributes from the directory service 110 are defined. These data are used to set the parameters for the security agent or for another application to be installed, using expert rules. For each device, a separate set of parameters is created, which is used in the configuration of the installation package for that device. The configured installation packages 141 are saved in the file storage, upon which hyperlinks are sent to network devices. The loading to the end devices can be performed through data transfer channels, which vary by their sharing environment, network parameters or pathways, data transfer protocols and applications. For example, the same file can be transferred using the Ethernet or Wi-Fi network, a TCP protocol or a UDP protocol. The choice of a data transfer channel and of its parameters can also be based on the directory service data and depends on the network infrastructure and on the device configuration.

Aspects of the invention are directed to processes for configuring and deploying security agents and the systems constructed to be used to that end.

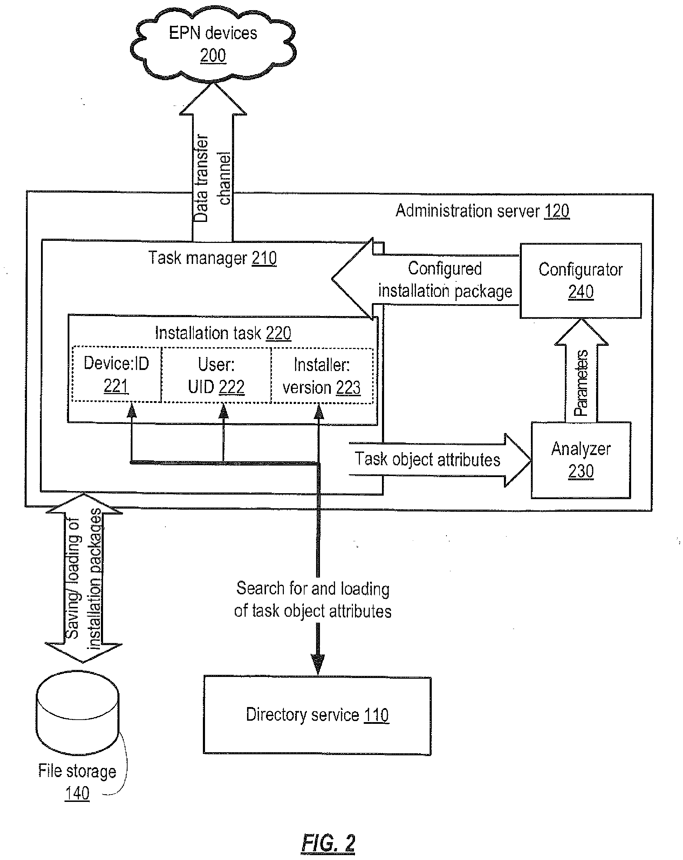

FIG. 2 is a diagram illustrating additional details of the system of FIG. 1 according to one embodiment. The components of this system can be installed on a separate network server or implemented in the form of a virtual machine or as a service for an administration server. The description of the implementation of a task manager module, a configurator module, and an analyzer module as part of administration server 120, which includes, or is coupled to, a file storage arrangement 140. The system is also connected to and interacts with the directory service 110 and EPN user devices 200.

In this example, administration server 120 is a tool for centralized management of an integrated security system, which grants the administrator access to detailed information about the corporate network's security level and facilitates flexible setup of all security system components. The administration server 120 manages the security agents which ensure the security of the end devices of the EPN.

In general, policies are tools for remotely administering the security-related parameters on user devices. Policies are used to set parameters related to the overall product, interface parameters and security component parameters. A policy is used both, to set up parameters and to monitor their utilization on computers. The parameters of a policy are sent to client computers as scheduled or in case of their change.

Administration work is planned through tasks, which include: an update task, a report-building task, a scanning task, a security agent installation task, and others. Tasks can be created for a device or a group of devices, depending on the established goals. The administration server allows to deploy a security system for a specified group of devices. The administrator can quickly configure and install security agents using installation packages.

The creation of a task includes several stages:
- Selection of the task type (installation, update, security agent setup, etc.);
- Setting of the task parameters;
- Selection of the group of objects for the task being managed;
- Setting up the execution schedule.

During the operation of the remote installation master or during the creation of an installation task in the task manager 210, the administrator defines the list of devices and/or groups of devices 221, on which it is needed to install the security agents, and the version of the program 223 being installed, to which a certain set of installation files correspond. The administrator can specify a list of users and/or groups of users in addition to, or instead of, a group of devices as the targets for installation. According to various embodiments, any attributes installed in the directory service and unique for the device may be used as device and user identifiers. A link to installation files (installation package), a name or any other application ID can be used as the installation package version ID, for example.

During the creation of an installation task 220, it is possible to choose target devices from a list. This list is built by the administration server 120 through network scanning. The scanning is performed periodically using various known methods.

One method for scanning a network involves the administration server 120 gathering lists of network computers exactly in the same manner as it is performed by an operating system (e.g., Windows® by Microsoft Corporation). This scanning method is called fast network scanning. Building and providing the computer list is the responsibility of the Computer Browser service. During a full network scan, the administration server 120 goes through the list obtained as a result of a fast scan, and attempts to connect to each computer using the NetBIOS protocol. The purpose of this poll is to identify the computers' IP addresses and operating systems. Another method for obtaining device lists is to use a directory service, for example, Active Directory. Scanning of networks is another option for obtaining a list of devices. This involves sending an echo request to all addresses of the specified ranges. Mobile device management (MDM) tools, an Exchange Active Sync protocol, or a special protocol of the administration server 120 can be used to obtain lists of mobile devices.

By default, the administration server 120 includes at least one group of computers. This setup forces the administrator to use a single protection policy for all computers. Even in small networks, it is generally convenient, and sometimes necessary, to use different protection settings for servers and user devices. In large networks, where different user groups use different specialized programs, the possibility to create policies with different exceptions for different users is quite convenient. In order to apply different policies, the devices can be assigned to different groups.

In large EPNs, administrators also create groups to organize the implementation process. For example, computers without a security agent or protection tools are put in the "Deployment" group, where a task of automatic security agent installation is created. Computers with an installed agent are put in the "Compatibility Check" group, where incompatible program removal tasks are created, etc. Finally, fully protected computers are moved into a permanent management structure.

The groups of users, devices and other network objects on the administration server and in the directory service can be synchronized, can complement each other, or can be unrelated. In the case where a group of devices selected during the creation of an installation task is not contained in a directory service in an obvious form, that group of devices can be viewed as multiple separate devices, each of which is represented in the directory service. A similar representation can be built for the users.

The administration server 120 can contain information on the connection between the users 100 and the devices (101-103) and can identify a user 100 by a specified device or vice versa. Therefore, the policy and the tasks for the devices can be transmitted to the relevant user accounts. In the scope of this description, we will discuss examples of managing devices and device groups on an EPN, though this example should not be viewed as limit the possibilities of the system and method described herein, as the comparison of devices and users allows to implement the proposed solution to manage both a single user and a group of users.

The administration server 120 can download information on the distribution of groups and computers, as well as their parameters, from the directory service 110. This can also be performed in an automatic mode, which allows to synchronize data in the directory service 110 and on the server 120. Additionally, the administration server 120 can store information (for example, device check parameters or user security ratings) in the directory service 110, for which it is necessary to complement the structure of the directory service 110.

Below is an example of an installation package 131 used to install programs in operating systems of the Windows® family of operating systems. An installation package 131 is a file which has the extension .msi and contains all the information required for the installation. The processing of this type of file and the performance of the installation process is the responsibility of a special component of the operating system, Windows Installer (a Windows installation manager).

A .msi file is a compound document containing a database which stores various information on the product and the installation process. All string data are stored in a separate part of the document, while the database tables contain pointers to the relevant data. In addition to the database, the structure of an .msi file allows to complement the file with user scenarios, scripts, and supplementary dynamic libraries, if they are required for the installation. The files being installed can be part of the installation package 141, or can be stored separately in compressed or uncompressed form.

The installation process includes several stages:
- gathering of information (determining the installation directory, the source of the installation files, the connection parameters, setting up the update parameters, etc.);
- execution of the installation (copying files, making changes to the system registry);
- going back to any installation stage, including cancellation of the installation (in case of error or exit from the installation program).

Each installation stage involves a sequence of actions (instructions) written in a database. Most actions are standard actions usual for a typical information gathering and installation process. The user can define a specialized set of actions. The user-defined actions can be either written in one of the script languages built in the operating system (JScript or VBScript), or located in a specially created library of functions (using C or C++ programming languages for a Windows family operating system (OS). A more detailed description of the format of installation packages and embodiments is provided in the MSDN documents library (hosted by Microsoft Corporation). Aspects of the invention are not limited to the use of this format of the installation packages 131 and can also support other formats, depending on the device's operating system, for example, RPM (Red Hat Package Manager) for the OC Linux family, and deb (Debian OC project).

The above-described possibilities, included as standard items in installation package 131, allow to change (supplement) the issued versions of programs without changing the program code and without re-compiling the executable files.

In one embodiment, a special version of the installer is created by making changes to the installation package 131. An example of such a change can be supplementing the installation package's database with program parameters and instructions which allow to automatically apply the parameters to the program. This feature allows automating the installation process and to optimize the installation management process by reducing the number of operations to be executed and by reducing the number of the tasks created by the administrator.

Advantageously, aspects of the present invention provide an improvement that facilitates deployment of a program on all required network devices, including devices located or organized into different structural groups, by creating a single installation task and using a single standard version of the program. In this case, an installation without additional user actions will take into account the specifics of the device and of the user. After the installation of the program, the parameters (settings) relevant for the user 100 and for the device (101-103) are applied. This result is achieved by configuring and installing an installation package which is unique for the user and device combination.

A directory service 110 is a module for hierarchical representation of company resources and of the information about such resources. Resources can mean personnel, network resources, programs, etc. An example of implementation of a directory service is Active Directory, which is most often used for EPN administration. Active Directory has a hierarchical structure composed of objects. Objects are divided in three main categories - resources, services, and user and computer accounts. Active Directory provides information on objects, allows to organize objects, and manage access to them, and sets security rules. An object is uniquely defined by its name and has a set of attributes, i.e. characteristics and data it can contain; the latter, in turn, depend on the object type. In the scope of this application, storage of information on the users and their devices is a key feature of the directory service 110. Access to the directory service data is gained by requests, after which the directory service 110 performs a search and provides information. The main structure of the Active Directory has a number of classes storing information on users, for example:
"Organizational-Person" - a class providing information on the user's position in the company's structure (title, role, unit, office, room, etc.);
"User" - a class of network users which includes information on employees or visitors. It is a sub-class of the "Organizational-Person" class.
"Person" - a class which stores personal information on the user.

Various attributes are used to describe classes - for example, "Address", "Department", "Employee-ID", "E-mail-Address", "Title", and other parameters. The classes are also linked to each other by logical links, which allows to define a user's connection parameters or the set of the programs used for work. The user is also matched with his/her devices. To define them, several classes are also used, such as:
"Device" - the main class for storage of data on physical network devices;
"Computer" - an account class for a network computer.

To describe device classes, the following attributes are used: "Machine-Role", "Managed-By, Owner", "Network-Address", "Operating-System", "Proxy-Addresses", and others.

A created task is a data structure composed of parameters which can be viewed as IDs of devices, users, or applications. Using these IDs, the task manager module 210 sends a request to the directory service 110, which results in an organized set of attributes that characterize each object of the task. The task manager loads the received attributes in the analyzer 230, which interprets attribute values into security parameter values. The interpretation rules are based on the security policy. Below are some examples of matches between user attributes and security agent parameters.

In one example, all human resource department users need remote access to the internal HR system, so if the installation task covers a device managed by a user from the HR (Human Resources) group, then a certificate and the settings for the access to the internal HR system will be added to the installation package 131. Therefore, an example of the analyzer 230 rule for this case in the form of the "if" clause will look as follows:
IF {department==HR} THEN {certificate=add},
where "department" is an attribute of the user's department, and "certificate" is a certificate addition parameter.

The security policy for company couriers takes into account their frequent travel, which increases the risk of infection of devices when connected to outside networks and the risk of loss of computer devices storing corporate data. For this group of employees, as well as for all the devices which are often connected in locations outside the office, the installation package 141 of the security agent must include an additional container with a safe browser and an agent setup, where the "GPS tracking" (tracking of coordinates) and the device locking function (if the device is inactive for a certain period of time) can be activated. This security policy requirement corresponds to the following analyzer 230 rule:

```
 IF {title==courier OR location!=local}
 THEN {safe_browser=add AND GPS=ON)},
```

where "safe_browser" is the parameter of addition of the protected browser component, and "GPS" is the parameter of the location tracking function activation.

Once one or all rules of the analyzer 230 have functioned, the resulting parameters are used to configure the installation package 131. The configurator module 240 can be implemented by a set of functions called depending on the input parameters. For the above examples, the configurator module 240 can include a certificate addition function, a component addition function, and a settings change function. The setup of an application can be performed using scripts (processed by the security agent itself, the operating system or another tool, such as an administration agent or an installation manager) executed during the launch of the installation package. Another approach for applying settings is to modify application resources (configuration files, executable files, resource files, registry keys, etc.). The installation package can contain not only modified installation files, but also can be expanded and can include additional programs, libraries, resource files or updates, which will be installed and applied during the security agent installation. Then, the configured installation package is saved by the task manager or directly by the configurator in the file storage arrangement 140.

Then, the configured installation package 141 is saved by the task manager module 210 or directly by the configurator module 240 in the file storage arrangement 140. The obtained parameters are used to configure not only the installation package, but also the data transfer channel. This approach recognizes that the method for transferring a file to a user device also depends on the device itself; for example, the physical location of the device on the network, the presence of necessary communication modules in the device, the network connection method (remote or local). If the device is connected to the administration server through the Internet, the transfer channel may need to be encrypted in some cases. The data transfer channel in the context of this document is provided by an administration server service, based on data transfer networks of various communication technologies, such as, for instance, Ethernet, Wi-Fi, GSM, CDMA, UMTS, LTE. Configuring a data transfer channel in this case involves determining the type of the data transfer network and identifying the address for data delivery (IP address, mobile telephone number, e-mail, personal account, etc.). In some embodiments, the configuration of the channel (selection of the data transfer protocol) can also depend on the data transfer speed - CSD, GPRS, EDGE, the HSPA family, 802.11 b/g/n, etc.

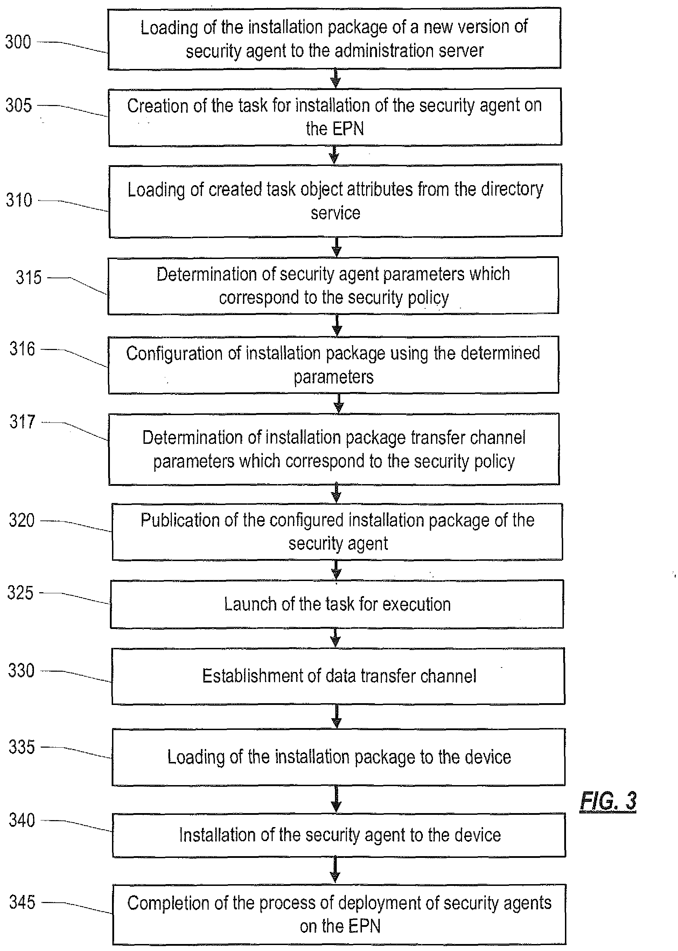

A method for deploying pre-configured security agents is illustrated in the flow diagram shown in FIG. 3. The method begins with the loading, at 300, of the installation package of a new version of the security agent to the administration server or to a file storage (if it is not included in the administration server structure). This is followed by the creation of an installation task at 305. The installation task can be created by the network administrator or created automatically using a rule. An example of such rule can be automatic installation of the agent when a new version is issued, or installation of the agent to all connected devices with no security tools. The task can also be created by user request when a web service is accessed. At 310, after the creation of the installation task, the attributes of the task's objects are determined by creating a request to the directory service and by loading the located attributes.

If the device was not previously connected to the network and if the directory service does not have information on this device, the user can pass the device registration process; to do this, he/she logs in a special web service, obtains authorization there and specifies the characteristics of the personal device. The registration of the device can be performed using plugins, which are loaded and installed upon connection to the specified web service; thereafter, the device configuration is obtained and sent to the administration server. The loaded attributes of the device are saved in the directory service and used to configure installation packages for the device.

After the creation of the installation task, the installation package and the data transfer channel are set up. These processes can occur either sequentially (as illustrated in FIG. 3) or simultaneously. Using the loaded attributes of the user, device, and other objects related to them contained in the directory service, block 315 determines the parameters of the security agent intended for that user and device, which meet the security policy. This is followed by the configuration of the installation package at 316, including the addition of components, certificate and configuration files, modification of security agent files (resource files, executable files, etc.), addition of installation scenarios for processing by the installation manager, and other actions required in order to take into account the specific features of the user and the device configuration during installation and operation of the security agent.

The determination of installation package transfer channel parameters which correspond to the security policy and device type is performed at 317. This can occur after the configuration of the installation package, or concurrently therewith. The configured installation package 141 is saved in the file storage and published at 320. Publication in this example involves determination of a hyperlink and the setup of access rights to files and network resources, so that the installation package 141 and the required installation files would be accessible for loading using the specified hyperlink.

When the installation task is launched for execution as scheduled, upon completion of the previous stages, or manually by the administrator, at 325, the data transfer channel 330 is established first with each of the devices; then, the installation package 335 is loaded. In case of successful loading, the installation package is launched and the security agent is installed on the device at 340; after this, the process of security agents deployment on the EPN concludes at 345.

The data transfer channel can be represented by a web service described above, which is configured so that it reflects the link to the installation package in accordance with the device and for the user for which the installation package was configured.

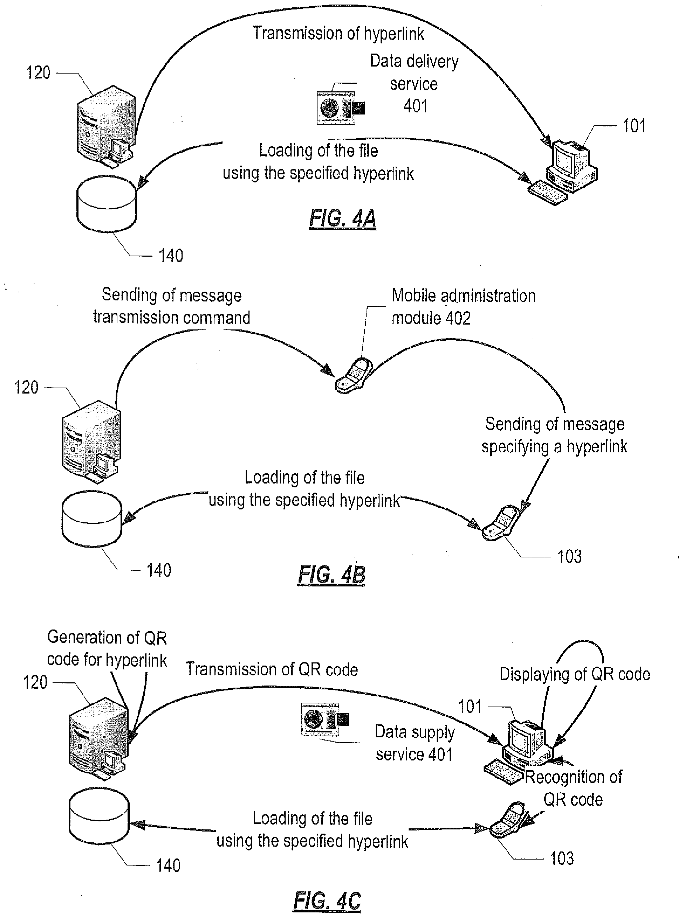

There is a large variety of data transfer channel types that can be used to transfer installation files to user devices. The following examples illustrated in connection with FIGs. 4A-4C are practical and user-friendly methods for transferring files to portable devices that have no administration agents.

Fig. 4A illustrates one approach in which the loading of an installation package is performed using a hyperlink sent by a data delivery service 401. A data delivery service 401 in this case can be a mail service, a web service, a messaging application and other tool capable of supplying a hyperlink to a user. The choice of the data delivery service 401 also depends on the information on the device 101 and the user, obtainable from the directory service. For example, the administration server 120 has information on the user's email; then, a message (e-mail) is generated on the server 120; and the link to the published files is inserted in the body of the email. Having received the email and having activated the link, the user moves to the installation page, from where he/she can load the installation package 141. The link can point directly to the installation package 141, then clicking on the link will automatically cause the loading of the file. After the installation package is loaded from the file storage arrangement 140 to the user's device 101, the only thing to be done to complete the installation is to run the loaded file.

Fig. 4B is a schematic diagram illustrating another approach according to one embodiment for loading an installation package using a hyperlink sent through mobile communication networks, A channel for transfer of short messages (for example, SMS or MMS messages) can also be used to deliver managing messages and links to published installation packages. To support an SMS messaging service, companies may either purchase special equipment or adapt their software for outside SMS messaging service protocols and make contracts with SMS service providers, which is not always convenient. One option to implement the mobile messaging function within a standard mobile network without using additional equipment is to use a mobile application connected to a mobile administration module 402. Such mobile administration module 402 is connected on one side to an administration server 120 and on the other side to a mobile network (for example, of GSM or CDMA standard).

The administration server 120 generates a message which includes a link to a published installation package 141 and the recipient's telephone number, corresponding to the user of the end device in the directory service. After that, the generated message is sent through a computer network or any other available communication interface to the mobile administration module 402. When connected to a mobile network, the mobile administration module 402 sends a message to the user's mobile device 103. When the message is delivered to the user, the installation package is loaded using the specified link, and the security agent is launched on the user device 103.

To receive a link to a portable device that does not have a mobile communication module for operation in GSM or CDMA networks (for example, a tablet computer), it is possible to use a mail service in order to send a hyperlink, as depicted in Fig. 4A.

In case if the directory service does not contain the personal mail address of the tablet computer owner, but specifies only a corporate address, the hyperlink to the installation package 141 is sent through the user's desktop computer. Fig. 4C is a schematic diagram that illustrates the loading of an installation package using a hyperlink sent in the quick response (QR) code format, e.g., an exemplary type of bar code. The administration server 120 creates an e-mail with a link to the installation package 141 configured for the user's portable device, but sends the link to a desktop computer controlled by the user. To simplify the input of the hyperlink to the portable device from a computer, a graphical representation of the hyperlink, such as a QR code, is used, The administration server 120 generates a QR code for the link and sends the link to the user's computer connected to the corporate mail. The link in the form of a QR code can also be published on the personal page of a corporate web service user. Another method for the transfer of the hyperlink can be a message with an attached image file containing a QR code, sent using quick messaging tools or in an MMS message.

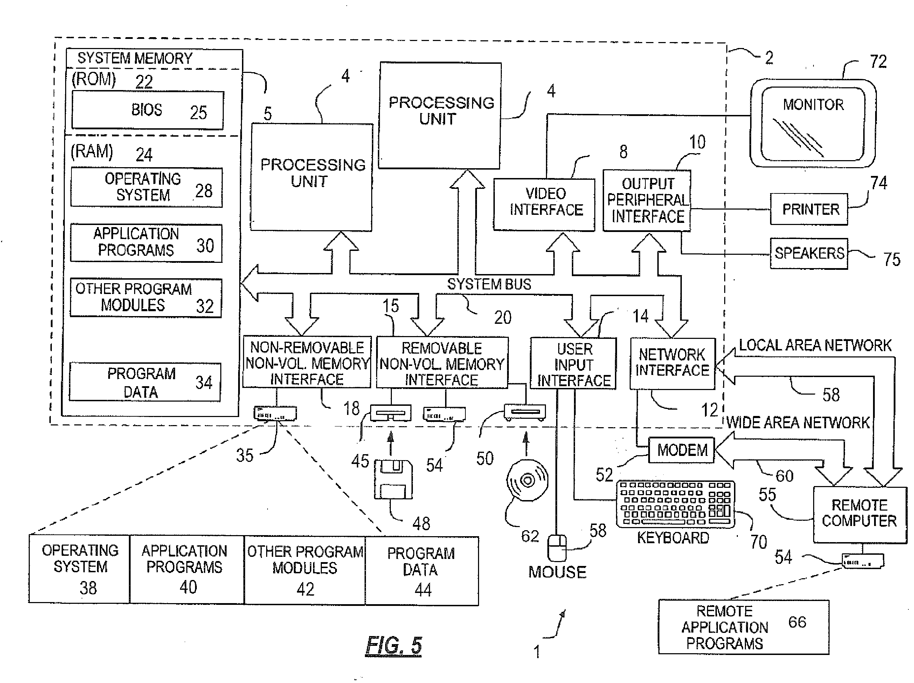

FIG. 5 is a diagram illustrating in greater detail a computer system 1 on which aspects of the invention as described herein may be implemented according to various embodiments. The computer system 1 may include a computing device such as a personal computer 2. The personal computer 2 includes one or more processing units 4, a system memory 5, a video interface 8, an output peripheral interface 10, a network interface 12, a user input interface 14, removable 16 and non-removable 18 memory interfaces and a system bus or high-speed communications channel 20 coupling the various components. In various embodiments, the processing units 4 may have multiple logical cores that are able to process information stored on computer readable media such as the system memory 5 or memory attached to the removable 16 and non-removable 18 memory interfaces 18. The computer 2 system memory 5 may include non-volatile memory such as Read Only Memory (ROM) 22 or volatile memory such as Random Access Memory (RAM) 24. The ROM 22 may include a basic input/output system (BIOS) 26 to help communicate with the other portion of the computer 2. The RAM 24 may store portions of various software applications such as the operating system 28, application programs 30 and other program modules 32. Further, the RAM 24 may store other information such as program or application data 34. In various embodiments, the RAM 24 stores information that requires low-latencies and efficient access, such as programs and data being manipulated or operated on. In various embodiments RAM 24 comprises Double Data Rate (DDR) memory, Error Correcting memory (ECC) or other memory technologies with varying latencies and configurations such as RAMBUS or DDR2 and DDR3. In this way, in various embodiments, the system memory 5 may store the input data store, access credential data store, operating memory data store, instruction set data store, analysis result data store and the operating memory data store. Further, in various embodiments, the processing units 4 may be configured to execute instructions that limit access to the aforementioned data stores by requiring access credential before access to the information is granted.

The removable 16 and non-removable 18 memory interfaces may couple the computer 2 to disk drives 35 such as SSD or rotational disk drives. These disk drives 35 may provide further storage for various software applications such as the operating system 38, application programs 40 and other program modules 42. Further, the disk drives 35 may store other information such as program or application data 44. In various embodiments, the disk drives 35 store information that doesn't require the same low-latencies as in other storage mediums, Further, the operating system 38, application program 40 data, program modules 42 and program or application data 44 may be the same information as that stored in the RAM 24 in various embodiments mentioned above or it may be different data potentially derivative of the RAM 24 stored data.

Further, the removable non-volatile memory interface 15 may couple the computer 2 to magnetic portable disk drives 45 that utilize magnetic media such as the floppy disk 48, Iomega® Zip or Jazz, or optical disk drives 50 that utilize optical media 62 for storage of computer readable media such as Blu-Ray®, DVD-R/RW, CD-R/RW and other similar formats. Still other embodiments utilize SSD or rotational disks housed in portable enclosures to increase the capacity of removable memory.

The computer 2 may utilize the network interface 12 to communicate with one or more remote computers 55 over a local area network (LAN) 58 or a wide area network (WAN) 60. The network interface 12 may utilize a Network Interface Card (NIC) or other interface such as a modem 52 to enable communication. The modem 52 may enable communication over telephone lines, coaxial, fiber optic, powerline, or wirelessly. The remote computer 55 may contain a similar hardware and software configuration or may have a memory 54 that contains remote application programs 66 that may provide additional computer readable instructions to the computer 2. In various embodiments, the remote computer memory 54 can be utilized to store information such as identified file information that may be later downloaded to local system memory 5. Further, in various embodiments the remote computer 55 may be an application server, an administrative server, client computers, or a network appliance.

A user may enter information to the computer 2 using input devices connected to the user input interface 14 such as a mouse 58 and keyboard 70. Additionally, the input device may be a trackpad, fingerprint scanner, joystick, barcode scanner, media scanner or the like. The video interface 8 may provide visual information to a display such as a monitor 72. The video interface 8 may be an embedded interface or it may be a discrete interface. Further, the computer may utilize a plurality of video interfaces 8, network interfaces 12 and removable 15 and non-removable 18 interfaces in order to increase the flexibility in operation of the computer 2. Further, various embodiments utilize several monitors 72 and several video interfaces 8 to vary the performance and capabilities of the computer 2. Other computer interfaces may be included in computer 2 such as the output peripheral interface 10. This interface may be coupled to a printer 74 or speakers 75 or other peripherals to provide additional functionality to the computer 2.

Various alternative configurations and implementations of the computer are contemplated. These variations may include, without limitation, additional interfaces coupled to the system bus 20 such as universal serial bus (USB), printer port, game port, PCI bus, PCI Express or integrations of the various components described above into chipset components such as the northbridge or southbridge. For example, in various embodiments, the processing unit 4 may include an embedded memory controller (not shown) to enable more efficient transfer of data from the system memory 5 than the system bus 20 may provide.

The embodiments above are intended to be illustrative and not limiting. Additional embodiments are within the claims. In addition, although aspects of the present invention have been described with reference to particular embodiments, those skilled in the art will recognize that changes can be made in form and detail without departing from the scope of the invention, as defined by the claims.

Persons of ordinary skill in the relevant arts will recognize that the invention may comprise fewer features than illustrated in any individual embodiment described above. The embodiments described herein are not meant to be an exhaustive presentation of the ways in which the various features of the invention may be combined. Accordingly, the embodiments are not mutually exclusive combinations of features; rather, the invention may comprise a combination of different individual features selected from different individual embodiments, as understood by persons of ordinary skill in the art.

## Claims

1. A system for automated deployment of a security application user agent to be installed, via a software installation package provided over a computer network, onto a plurality of different user devices (101-103, 200) for a plurality of different users (100), the system comprising:
set of instructions executable by computing hardware and stored in a non-transitory storage medium that, when executed, cause the computing hardware to implement:
a task manager module (210) that obtains (300) an initial software installation package (131), and communicates with a network attributes data store (110) via the computer network to obtain (310) information representing (a) associations between the plurality of users (100) and the plurality of user devices (101-103, 200), (b) user attributes from which access privilege level information for individual users (100) is determinable, and (c) device attributes for each of the plurality of user devices (101-103, 200), including network connectivity information;
a configurator module (240) that:
custom-configures the initial software installation package (131) for individual ones of the plurality of user devices (101-103, 200) based on the information representing (a), (b), and (c) to produce a plurality of different specially-configured software installation packages (141), each one of which corresponds to one or more specific users (100) and one or more specific user devices (101-103, 200), wherein each specially-configured software installation package (141) includes installation parameters that establish functionality for the security application user agent based on the access privilege level of the corresponding one or more specific users (100); and
custom-configures data transfer channels for individual ones of the plurality of user devices (101-103, 200) based on the information representing (a), (b), and (c), each data transfer channel corresponding to one or more specific users (100) and one or more specific user devices (101-103, 200), wherein each data transfer channel is associated with a selected data transfer protocol determined by the configurator module (240) to be suitable for the one or more specific user devices (101-103, 200);
wherein the task manager module obtains information representing a security policy, and wherein the configurator module is adapted to produce each specially-configured software installation package such that the installation parameters establish functionality based further on that security policy, and to produce each specially-configured data transfer channel in accordance with that security policy.

2. The system of claim 1, wherein the set of instructions, when executed, cause the computing hardware to implement the configurator module (240) so that it applies a set of expert rules to produce each specially-configured software installation package (131), wherein the set of expert rules define various software installation package parameter settings according to various characteristics of the security policy.

3. The system of any preceding claim, wherein user attributes from which the access privilege level information for individual users (100) is determinable includes at least one attribute selected from the group consisting of: a title or role of the user (100) in an organization; a configuration of the user device (101-103, 200), attributes of a network connection between the user device (101-103, 200) and the task manager module (210), a list of network resources accessible to the user (100) via the user device (101-103, 200); an identification of an organization to which the user (100) is assigned.

4. The system of any preceding claim, wherein the set of instructions, when executed, cause the computing hardware to implement the configurator module (240) to receive, from a data delivery service module, a link to a data store (140) from which each specially-configured software installation package (131) is downloadable by each user device (101-103, 200).

5. The system of any preceding claim, wherein the set of instructions, when executed, cause the computing hardware to implement the configurator module (240) to receive, from a mobile device administration module, a link to a data store (140) from which each specially-configured software installation package (131) for user devices (101-103, 200) that are mobile devices is downloadable by each user device (101-103, 200) via a messaging service specific to mobile devices.

6. The system of any preceding claim, wherein the network connectivity information in (b) includes at least one attribute selected from the group consisting of: a physical location of the user device (101-103, 200), a presence of one or more certain communication modules on a user device (101-103, 200), a mode of network connectivity employed by a user device (101-103, 200), or any combination thereof.

7. The system of any preceding claim, wherein the set of instructions, when executed, cause the computing hardware to implement the configurator module (240) to custom-configure each data transfer channel differently in response to each item of network connectivity information that relates to mode of connectivity selected from among wired or wireless modes of network connectivity.

8. The system of any preceding claim, wherein the set of instructions, when executed, cause the computing hardware to implement the configurator module (240) to custom-configure each data transfer channel differently in response to each item of network connectivity information that relates to mode of connectivity selected from among local area network and wide area network connectivity.

9. The system of any preceding claim, wherein the set of instructions, when executed, cause the computing hardware to implement the configurator module (240) to custom-configure each data transfer channel differently in response to each item of network connectivity information that relates to mode of connectivity selected from among relatively low-bandwidth connectivity, and relatively high-bandwidth connectivity.

10. The system of any preceding claim, wherein the set of instructions, when executed, cause the computing hardware to implement the configurator module (240) to custom-configure each data transfer channel to include a certain degree of data encryption in response to each item of network connectivity information relating to security risk.

11. A method for automated deployment of a security application user agent to be installed, via a software installation package provided over a computer network, onto a plurality of different user devices (101-103, 200) for a plurality of different users (100), the method comprising:
obtaining an initial software installation package (131), and information representing (a) associations between the plurality of users (100) and the plurality of user devices (101-103, 200), (b) user attributes from which access privilege level information for individual users (100) is determinable, and (c) device attributes for each of the plurality of user devices (101-103, 200), including network connectivity information;
obtaining information representing a security policy;
custom-configuring the initial software installation package (131) for individual ones of the plurality of user devices (101-103, 200) based on the information representing (a), (b), and (c) to produce a plurality of different specially-configured software installation packages (141), each one of which corresponds to one or more specific users (100) and one or more specific user devices (101-103, 200), wherein each specially-configured software installation package (141) includes installation parameters that establish functionality for the security application user agent based on the access privilege level of the corresponding one or more specific users (100), and wherein the installation parameters of each specially-configured software installation package (141) establish functionality based on the security policy; and
custom-configuring data transfer channels for individual ones of the plurality of user devices (101-103, 200) based on the information representing (a), (b), and (c), each data transfer channel corresponding to one or more specific users (100) and one or more specific user devices (101-103, 200), wherein each data transfer channel is configured in accordance with the security policy and is associated with a selected data transfer protocol determined to be suitable for the one or more specific user devices (101-103, 200).

12. The method of claim 11, wherein custom-configuring data transfer channels includes configuring each data transfer channel differently in response to each item of network connectivity information that relates to mode of connectivity selected from among wired or wireless modes of network connectivity.

13. The method of any one of claims 11-12, wherein custom-configuring data transfer channels includes configuring each data transfer channel differently in response to each item of network connectivity information that relates to mode of connectivity selected from among local area network and wide area network connectivity.

14. The method of any one of claims 11-13, wherein custom-configuring data transfer channels includes configuring each data transfer channel differently in response to each item of network connectivity information that relates to mode of connectivity selected from among relatively low-bandwidth connectivity, and relatively high-bandwidth connectivity.

15. The method of any one of claims 11-14, wherein custom-configuring data transfer channels includes configuring each data transfer channel to include a certain degree of data encryption in response to each item of network connectivity information relating to security risk.

## Patentansprüche

1. System zur automatisierten Verteilung eines Sicherheitsanwendungs-Benutzeragenten, der mittels eines über ein Computernetzwerk bereitgestellten Software-Installationspakets auf einer Vielzahl von unterschiedlichen Benutzergeräten (101-103, 200) für eine Vielzahl von unterschiedlichen Benutzern (100) zu installieren ist, wobei das System umfasst:
eine Menge von Anweisungen, die durch Computer-Hardware ausführbar und in einem nichtflüchtigen Speichermedium gespeichert sind, die, wenn sie ausgeführt wird, die Computer-Hardware veranlasst, Folgendes zu implementieren:
ein Taskmanager-Modul (210), das ein ursprüngliches Software-Installationspaket (131) erlangt (300) und mittels des Computernetzwerks mit einem Netzwerkattribut-Datenspeicher (110) kommuniziert, um Information zu erlangen (310), die Folgendes darstellt: (a) Zuordnungen zwischen der Vielzahl von Benutzern (100) und der Vielzahl von Benutzergeräten (101-103, 200), (b) Benutzerattribute, aus denen Zugangsprivilegniveauinformation für einzelne Benutzer (100) bestimmbar ist, und (c) Geräteattribute für jedes aus der Vielzahl von Benutzergeräten (101-103, 200), einschließlich Netzwerkkonnektivitätsinformation;
ein Konfiguratormodul (240), welches:
auf der Grundlage der (a), (b) und (c) darstellenden Information das ursprüngliche Software-Installationspaket (131) für einzelne aus der Vielzahl von Benutzergeräten (101-103, 200) benutzerspezifisch konfiguriert, um eine Vielzahl von unterschiedlichen speziell konfigurierten Software-Installationspaketen (141) zu erzeugen, deren jedes einem oder mehreren spezifischen Benutzern (100) und einem oder mehreren spezifischen Benutzergeräten (101-103, 200) entspricht, worin jedes speziell konfigurierte Software-Installationspaket (141) Installationsparameter aufweist, die auf der Grundlage des Zugangsprivilegniveaus der entsprechenden einen oder mehreren spezifischen Benutzer (100) Funktionalität für den Sicherheitsanwendungs-Benutzeragenten einrichten; und
auf der Grundlage der (a), (b) und (c) darstellenden Information Datenübertragungskanäle für einzelne aus der Vielzahl von Benutzergeräten (101-103, 200) benutzerspezifisch konfiguriert, wobei jeder Datenübertragungskanal einem oder mehreren spezifischen Benutzern (100) und einem oder mehreren spezifischen Benutzergeräten (101-103, 200) entspricht, worin jedem Datenübertragungskanal ein ausgewähltes Datenübertragungsprotokoll zugeordnet ist, das durch das Konfiguratormodul (240) als geeignet für das eine oder die mehreren spezifischen Benutzergeräte (101-103, 200) bestimmt wurde;
worin das Taskmanager-Modul Information erlangt, die eine Sicherheitsrichtlinie darstellt, und worin das Konfiguratormodul dafür eingerichtet ist, jedes speziell konfigurierte Software-Installationspaket so zu erzeugen, dass die Installationsparameter Funktionalität ferner auf der Grundlage dieser Sicherheitsrichtlinie einrichten, und jeden speziell konfigurierten Datenübertragungskanal gemäß dieser Sicherheitsrichtlinie zu erzeugen.

2. System nach Anspruch 1, worin die Menge von Anweisungen, wenn sie ausgeführt wird, die Computer-Hardware veranlasst, das Konfiguratormodul (240) so zu implementieren, dass es eine Menge von Expertenregeln anwendet, um jedes speziell konfigurierte Software-Installationspaket (131) zu erzeugen, worin die Menge von Expertenregeln verschiedene Software-Installationspaketparametereinstellungen gemäß verschiedenen charakteristischen Merkmalen der Sicherheitsrichtlinie definiert.

3. System nach einem der vorhergehenden Ansprüche, worin Benutzerattribute, aus denen Zugangsprivilegniveauinformation für einzelne Benutzer (100) bestimmbar ist, mindestens ein Attribut aufweisen, das aus der Gruppe ausgewählt wird, die aus Folgendem besteht: ein Titel oder eine Funktion des Benutzers (100) in einer Organisation; eine Konfiguration des Benutzergeräts (101-103, 200); Attribute einer Netzwerkverbindung zwischen dem Benutzergerät (101-103, 200) und dem Taskmanager-Modul (210); eine Liste von Netzwerkressourcen, die für den Benutzer (100) mittels des Benutzergeräts (101-103, 200) zugänglich sind; eine Kennung einer Organisation, welcher der Benutzer (100) zugeteilt ist.

4. System nach einem der vorhergehenden Ansprüche, worin die Menge von Anweisungen, wenn sie ausgeführt wird, die Computer-Hardware veranlasst, das Konfiguratormodul (240) dafür zu implementieren, von einem Datenzustellungsdienstmodul einen Link zu einem Datenspeicher (140) zu empfangen, aus dem jedes speziell konfigurierte Software-Installationspaket (131) durch jedes Benutzergerät (101-103, 200) herunterladbar ist.

5. System nach einem der vorhergehenden Ansprüche, worin die Menge von Anweisungen, wenn sie ausgeführt wird, die Computer-Hardware veranlasst, das Konfiguratormodul (240) dafür zu implementieren, von einem Mobilgeräteadministrationsmodul einen Link zu einem Datenspeicher (140) zu empfangen, aus dem für Benutzergeräte (101-103, 200), die Mobilgeräte sind, jedes speziell konfigurierte Software-Installationspaket (131) durch jedes Benutzergerät (101-103, 200) mittels eines für mobilgerätespezifischen Mitteilungsdienstes herunterladbar ist.

6. System nach einem der vorhergehenden Ansprüche, worin die Netzwerkkonnektivitätsinformation in (b) mindestens ein Attribut aufweist, das aus der Gruppe ausgewählt wird, die aus Folgendem besteht: ein physischer Standort des Benutzergeräts (101-103, 200); ein Vorhandensein von einem oder mehreren bestimmten Kommunikationsmodulen auf einem Benutzergerät (101-103, 200); ein durch ein Benutzergerät (101-103, 200) verwendeter Modus der Netzwerkkonnektivität; oder eine Kombination davon.

7. System nach einem der vorhergehenden Ansprüche, worin die Menge von Anweisungen, wenn sie ausgeführt wird, die Computer-Hardware veranlasst, das Konfiguratormodul (240) dafür zu implementieren, als Antwort auf jedes Element von Netzwerkkonnektivitätsinformation, das sich auf den Modus der Konnektivität bezieht, der aus drahtgebundenen oder drahtlosen Modi der Netzwerkkonnektivität ausgewählt wird, jeden Datenübertragungskanal auf unterschiedliche Weise benutzerspezifisch zu konfigurieren.

8. System nach einem der vorhergehenden Ansprüche, worin die Menge von Anweisungen, wenn sie ausgeführt wird, die Computer-Hardware veranlasst, das Konfiguratormodul (240) dafür zu implementieren, als Antwort auf jedes Element von Netzwerkkonnektivitätsinformation, das sich auf den Modus der Konnektivität bezieht, der aus Lokalnetzwerk- und Weitbereichsnetzwerkkonnektivität ausgewählt wird, jeden Datenübertragungskanal auf unterschiedliche Weise benutzerspezifisch zu konfigurieren.

9. System nach einem der vorhergehenden Ansprüche, worin die Menge von Anweisungen, wenn sie ausgeführt wird, die Computer-Hardware veranlasst, das Konfiguratormodul (240) dafür zu implementieren, als Antwort auf jedes Element von Netzwerkkonnektivitätsinformation, das sich auf den Modus der Konnektivität bezieht, der aus Konnektivität relativ niedriger Bandbreite und Konnektivität relativ hoher Bandbreite ausgewählt wird, jeden Datenübertragungskanal auf unterschiedliche Weise benutzerspezifisch zu konfigurieren.

10. System nach einem der vorhergehenden Ansprüche, worin die Menge von Anweisungen, wenn sie ausgeführt wird, die Computer-Hardware veranlasst, das Konfiguratormodul (240) dafür zu implementieren, als Antwort auf jedes Element von Netzwerkkonnektivitätsinformation, das sich auf Sicherheitsrisiken bezieht, jeden Datenübertragungskanal dafür benutzerspezifisch zu konfigurieren, dass er einen bestimmten Grad von Datenverschlüsselung aufweist.

11. Verfahren zur automatisierten Verteilung eines Sicherheitsanwendungs-Benutzeragenten, der mittels eines über ein Computernetzwerk bereitgestellten Software-Installationspakets auf einer Vielzahl von unterschiedlichen Benutzergeräten (101-103, 200) für eine Vielzahl von unterschiedlichen Benutzern (100) zu installieren ist, wobei das Verfahren umfasst:
Erlangen eines ursprünglichen Software-Installationspakets (131) und von Information, die Folgendes darstellt: (a) Zuordnungen zwischen der Vielzahl von Benutzern (100) und der Vielzahl von Benutzergeräten (101-103, 200), (b) Benutzerattribute, aus denen Zugangsprivilegniveauinformation für einzelne Benutzer (100) bestimmbar ist, und (c) Geräteattribute für jedes aus der Vielzahl von Benutzergeräten (101-103, 200), einschließlich Netzwerkkonnektivitätsinformation;
Erlangen von Information, die eine Sicherheitsrichtlinie darstellt;
benutzerspezifisches Konfigurieren des ursprünglichen Software-Installationspakets (131) für einzelne aus der Vielzahl von Benutzergeräten (101-103, 200) auf der Grundlage der (a), (b) und (c) darstellenden Information, um eine Vielzahl von unterschiedlichen speziell konfigurierten Software-Installationspaketen (141) zu erzeugen, deren jedes einem oder mehreren spezifischen Benutzern (100) und einem oder mehreren spezifischen Benutzergeräten (101-103, 200) entspricht, worin jedes speziell konfigurierte Software-Installationspaket (141) Installationsparameter aufweist, die auf der Grundlage des Zugangsprivilegniveaus der entsprechenden einen oder mehreren spezifischen Benutzer (100) Funktionalität für den Sicherheitsanwendungs-Benutzeragenten einrichten, und worin die Installationsparameter jedes speziell konfigurierten Software-Installationspakets (141) Funktionalität auf der Grundlage der Sicherheitsrichtlinie einrichten; und
benutzerspezifisches Konfigurieren von Datenübertragungskanälen für einzelne aus der Vielzahl von Benutzergeräten (101-103, 200) auf der Grundlage der (a), (b) und (c) darstellenden Information, wobei jeder Datenübertragungskanal einem oder mehreren spezifischen Benutzern (100) und einem oder mehreren spezifischen Benutzergeräten (101-103, 200) entspricht, worin jeder Datenübertragungskanal gemäß der Sicherheitsrichtlinie konfiguriert und einem ausgewählten Datenübertragungsprotokoll zugeordnet wird, das als geeignet für das eine oder die mehreren spezifischen Benutzergeräte (101-103, 200) bestimmt wurde.

12. Verfahren nach Anspruch 11, worin das benutzerspezifische Konfigurieren von Datenübertragungskanälen einschließt: unterschiedliches Konfigurieren jedes Datenübertragungskanals als Antwort auf jedes Element von Netzwerkkonnektivitätsinformation, das sich auf den Modus der Konnektivität bezieht, der aus drahtgebundenen oder drahtlosen Modi der Netzwerkkonnektivität ausgewählt wird.

13. Verfahren nach einem der Ansprüche 11 bis 12, worin das benutzerspezifische Konfigurieren von Datenübertragungskanälen einschließt: unterschiedliches Konfigurieren jedes Datenübertragungskanals als Antwort auf jedes Element von Netzwerkkonnektivitätsinformation, das sich auf den Modus der Konnektivität bezieht, der aus Lokalnetzwerk- und Weitbereichsnetzwerkkonnektivität ausgewählt wird.

14. Verfahren nach einem der Ansprüche 11 bis 13, worin das benutzerspezifische Konfigurieren von Datenübertragungskanälen einschließt: unterschiedliches Konfigurieren jedes Datenübertragungskanals als Antwort auf jedes Element von Netzwerkkonnektivitätsinformation, das sich auf den Modus der Konnektivität bezieht, der aus Konnektivität relativ niedriger Bandbreite und Konnektivität relativ hoher Bandbreite ausgewählt wird.

15. Verfahren nach einem der Ansprüche 11 bis 14, worin das benutzerspezifische Konfigurieren von Datenübertragungskanälen einschließt: Konfigurieren jedes Datenübertragungskanals dafür, als Antwort auf jedes Element von Netzwerkkonnektivitätsinformation, das sich auf Sicherheitsrisiken bezieht, einen bestimmten Grad von Datenverschlüsselung aufzuweisen.

## Revendications

1. Système de déploiement automatisé d'un agent utilisateur d'application de sécurité devant être installé, par l'intermédiaire d'un paquet d'installation de logiciel fourni sur un réseau informatique, sur une pluralité de dispositifs d'utilisateurs distincts (101-103, 200) pour une pluralité d'utilisateurs distincts (100), le système comprenant :
un ensemble d'instructions exécutable par du matériel informatique et stocké dans un support de stockage non transitoire qui, lorsqu'il est exécuté, amène le matériel informatique à mettre en oeuvre :
un module de gestionnaire de tâches (210) qui obtient (300) un paquet d'installation de logiciel initial (131), et qui communique avec un magasin de stockage de données d'attributs de réseau (110) par l'intermédiaire du réseau informatique en vue d'obtenir (310) des informations représentant: (a) des associations entre la pluralité d'utilisateurs (100) et la pluralité de dispositifs d'utilisateurs (101-103, 200), (b) des attributs d'utilisateurs à partir desquels peuvent être déterminées des informations de niveau de privilège d'accès pour des utilisateurs individuels (100), et (c) des attributs de dispositifs pour chaque dispositif de la pluralité de dispositifs d'utilisateurs (101-103, 200), y compris des informations de connectivité de réseau ;
un module de configurateur (240) qui :
configure sur mesure le paquet d'installation de logiciel initial (131) pour des dispositifs individuels de la pluralité de dispositifs d'utilisateurs (101-103, 200), sur la base d'informations représentant les éléments (a), (b) et (c), en vue de produire une pluralité de paquets d'installation de logiciels spécialement configurés distincts (141), dont chacun correspond à un ou plusieurs utilisateurs spécifiques (100) et à un ou plusieurs dispositifs d'utilisateurs spécifiques (101-103, 200), dans lequel chaque paquet d'installation de logiciel spécialement configuré (141) comprend des paramètres d'installation qui établissent une fonctionnalité pour l'agent utilisateur d'application de sécurité, sur la base du niveau de privilège d'accès dudit un ou desdits plusieurs utilisateurs spécifiques correspondants (100) ; et
configure sur mesure des canaux de transfert de données pour des dispositifs individuels de la pluralité de dispositifs d'utilisateurs (101-103, 200), sur la base d'informations représentant les éléments (a) (b), (c), chaque canal de transfert de données correspondant à un ou plusieurs utilisateurs spécifiques (100) et à un ou plusieurs dispositifs d'utilisateurs spécifiques (101-103, 200), dans lequel chaque canal de transfert de données est associé à un protocole de transfert de données sélectionné déterminé par le module de configurateur (240) comme étant pertinent pour ledit un ou lesdits plusieurs dispositifs d'utilisateurs spécifiques (101-103, 200) ;
dans lequel le module de gestionnaire de tâches obtient des informations représentant une politique de sécurité, et dans lequel le module de configurateur est apte à produire chaque paquet d'installation de logiciel spécialement configuré, de sorte que les paramètres d'installation établissent la fonctionnalité en outre sur la base de cette politique de sécurité, et à produire chaque canal de transfert de données spécialement configuré conformément à cette politique de sécurité.

2. Système selon la revendication 1, dans lequel l'ensemble d'instructions, lorsqu'il est exécuté, amène le matériel informatique à mettre en oeuvre le module de configurateur (240) de sorte qu'il applique un ensemble de règles expertes pour produire chaque paquet d'installation de logiciel spécialement configuré (131), dans lequel l'ensemble de règles expertes définit divers réglages de paramètres de paquet d'installation de logiciel selon diverses caractéristiques de la politique de sécurité.

3. Système selon l'une quelconque des revendications précédentes, dans lequel des attributs d'utilisateurs, à partir desquels les informations de niveau de privilège d'accès pour des utilisateurs individuels (100) peuvent être déterminées, incluent au moins un attribut sélectionné à partir du groupe constitué par : un titre ou un rôle de l'utilisateur (100) dans une organisation ; une configuration du dispositif d'utilisateur (101-103, 200), des attributs d'une connexion de réseau entre le dispositif d'utilisateur (101-103, 200) et le module de gestionnaire de tâches (210), une liste de ressources de réseau accessible par l'utilisateur (100) par l'intermédiaire du dispositif d'utilisateur (101-103, 200) ; et une identification d'une organisation à laquelle est affecté l'utilisateur (100).

4. Système selon l'une quelconque des revendications précédentes, dans lequel l'ensemble d'instructions, lorsqu'il est exécuté, amène le matériel informatique à mettre en oeuvre le module de configurateur (240) de manière à recevoir, en provenance d'un module de service de distribution de données, un lien vers un magasin de stockage de données (140) à partir duquel chaque paquet d'installation de logiciel spécialement configuré (131) peut être téléchargé par chaque dispositif d'utilisateur (101-103, 200).

5. Système selon l'une quelconque des revendications précédentes, dans lequel l'ensemble d'instructions, lorsqu'il est exécuté, amène le matériel informatique à mettre en oeuvre le module de configurateur (240) de manière à recevoir, en provenance d'un module d'administration de dispositifs mobiles, un lien vers un magasin de stockage de données (140) à partir duquel chaque paquet d'installation de logiciel spécialement configuré (131), pour des dispositifs d'utilisateurs (101-103, 200) correspondant à des dispositifs mobiles, peut être téléchargé par chaque dispositif d'utilisateur (101-103, 200), par l'intermédiaire d'un service de messagerie propre aux dispositifs mobiles.

6. Système selon l'une quelconque des revendications précédentes, dans lequel les informations de connectivité de réseau mentionnées au point (b) incluent au moins un attribut sélectionné à partir du groupe constitué par : un emplacement physique du dispositif d'utilisateur (101-103, 200), une présence d'un ou plusieurs modules de communication donnés sur un dispositif d'utilisateur (101-103, 200), un mode de connectivité de réseau employé par un dispositif d'utilisateur (101-103 200), ou leurs combinaisons.

7. Système selon l'une quelconque des revendications précédentes, dans lequel l'ensemble d'instructions, lorsqu'il est exécuté, amène le matériel informatique à mettre en oeuvre le module de configurateur (240) de manière à configurer sur mesure chaque canal de transfert de données, différemment, en réponse à chaque élément d'informations de connectivité de réseau qui se rapporte à un mode de connectivité sélectionné parmi des modes filaires ou sans fil de connectivité de réseau.

8. Système selon l'une quelconque des revendications précédentes, dans lequel l'ensemble d'instructions, lorsqu'il est exécuté, amène le matériel informatique à mettre en oeuvre le module de configurateur (240) de manière à configurer sur mesure chaque canal de transfert de données, différemment, en réponse à chaque élément d'informations de connectivité de réseau qui se rapporte à un mode de connectivité sélectionné parmi une connectivité de réseau local et une connectivité de réseau étendu.

9. Système selon l'une quelconque des revendications précédentes, dans lequel l'ensemble d'instructions, lorsqu'il est exécuté, amène le matériel informatique à mettre en oeuvre le module de configurateur (240) de manière à configurer sur mesure chaque canal de transfert de données, différemment, en réponse à chaque élément d'informations de connectivité de réseau qui se rapporte à un mode de connectivité sélectionné parmi une connectivité à bande passante relativement faible et une connectivité à bande passante relativement élevée.

10. Système selon l'une quelconque des revendications précédentes, dans lequel l'ensemble d'instructions, lorsqu'il est exécuté, amène le matériel informatique à mettre en oeuvre le module de configurateur (240) de manière à configurer sur mesure chaque canal de transfert de données en vue d'inclure un degré donné de chiffrement de données en réponse à chaque élément d'informations de connectivité de réseau connexe à un risque de sécurité.

11. Procédé de déploiement automatisé d'un agent utilisateur d'application de sécurité devant être installé, par l'intermédiaire d'un paquet d'installation de logiciel fourni sur un réseau informatique, sur une pluralité de dispositifs d'utilisateurs distincts (101-103, 200) pour une pluralité d'utilisateurs distincts (100), le procédé comprenant les étapes ci-dessous consistant à :
obtenir un paquet d'installation de logiciel initial (131), et des informations représentant : (a) des associations entre la pluralité d'utilisateurs (100) et la pluralité de dispositifs d'utilisateurs (101-103, 200), (b) des attributs d'utilisateurs à partir desquels peuvent être déterminées des informations de niveau de privilège d'accès pour des utilisateurs individuels (100), et (c) des attributs de dispositifs pour chaque dispositif de la pluralité de dispositifs d'utilisateurs (101-103, 200), y compris des informations de connectivité de réseau ;
obtenir des informations représentant une politique de sécurité ;
configurer sur mesure le paquet d'installation de logiciel initial (131) pour des dispositifs individuels de la pluralité de dispositifs d'utilisateurs (101-103, 200), sur la base d'informations représentant les éléments (a), (b) et (c), en vue de produire une pluralité de paquets d'installation de logiciels spécialement configurés distincts (141), dont chacun correspond à un ou plusieurs utilisateurs spécifiques (100) et à un ou plusieurs dispositifs d'utilisateurs spécifiques (101-103, 200), dans lequel chaque paquet d'installation de logiciel spécialement configuré (141) comprend des paramètres d'installation qui établissent une fonctionnalité pour l'agent utilisateur d'application de sécurité, sur la base du niveau de privilège d'accès dudit un ou desdits plusieurs utilisateurs spécifiques correspondants (100), et dans lequel les paramètres d'installation de chaque paquet d'installation de logiciel spécialement configuré (141) établissent une fonctionnalité sur la base de la politique de sécurité ; et
configurer sur mesure des canaux de transfert de données pour des dispositifs individuels de la pluralité de dispositifs d'utilisateurs (101-103, 200), sur la base d'informations représentant les éléments (a) (b), (c), et chaque canal de transfert de données correspondant à un ou plusieurs utilisateurs spécifiques (100) et à un ou plusieurs dispositifs d'utilisateurs spécifiques (101-103, 200), dans lequel chaque canal de transfert de données est configuré conformément à la politique de sécurité et est associé à un protocole de transfert de données sélectionné déterminé comme étant pertinent pour ledit un ou lesdits plusieurs dispositifs d'utilisateurs spécifiques (101-103, 200).

12. Procédé selon la revendication 11, dans lequel l'étape de configuration sur mesure de canaux de transfert de données consiste à configurer chaque canal de transfert de données différemment en réponse à chaque élément d'informations de connectivité de réseau qui se rapporte à un mode de connectivité sélectionné parmi des modes filaires ou sans fil de connectivité de réseau.

13. Procédé selon l'une quelconque des revendications 11 et 12, dans lequel l'étape de configuration sur mesure de canaux de transfert de données consiste à configurer chaque canal de transfert de données différemment en réponse à chaque élément d'informations de connectivité de réseau qui se rapporte à un mode de connectivité sélectionné parmi une connectivité de réseau local et une connectivité de réseau étendu.

14. Procédé selon l'une quelconque des revendications 11 à 13, dans lequel l'étape de configuration sur mesure de canaux de transfert de données consiste à configurer chaque canal de transfert de données différemment en réponse à chaque élément d'informations de connectivité de réseau qui se rapporte à un mode de connectivité sélectionné parmi une connectivité à bande passante relativement faible et une connectivité à bande passante relativement élevée.

15. Procédé selon l'une quelconque des revendications 11 à 14, dans lequel l'étape de configuration sur mesure de canaux de transfert de données consiste à configurer chaque canal de transfert de données en vue d'inclure un degré donné de chiffrement de données en réponse à chaque élément d'informations de connectivité de réseau connexe à un risque de sécurité.
